Europäisches Patentamt

European Patent Office

Office européen des brevets

(19)

(11) Veröffentlichungsnummer: **0 271 773 B1**

# EUROPÄISCHE PATENTSCHRIFT

(12)

(45) Veröffentlichungstag der Patentschrift: **04.12.91**

(51) Int. Cl.⁵: **H04J 3/14**, G06F 11/00

(21) Anmeldenummer: **87117834.9**

(22) Anmeldetag: **02.12.87**

(54) **Verfahren und Anordnung zum Erkennen und Melden von fehlerhaften, Datenmultiplexer steuernden Steuersignalen in integrierten Schaltungsbausteinen.**

(30) Priorität: **05.12.86 DE 3641589**

(43) Veröffentlichungstag der Anmeldung:
**22.06.88 Patentblatt 88/25**

(45) Bekanntmachung des Hinweises auf die
Patenterteilung:
**04.12.91 Patentblatt 91/49**

(84) Benannte Vertragsstaaten:
**AT BE CH DE FR GB IT LI NL SE**

(56) Entgegenhaltungen:
**FR-A- 2 169 934**
**US-A- 3 873 776**

**IBM TECHNICAL DISCLOSURE BULLETIN,
Band 19, Nr. 8, Januar 1977, Seiten
2935-2936, New York, US; P.J. CURLANDER:
"Indicating control-circuit detected errors"**

**PATENT ABSTRACTS OF JAPAN, Band 9, Nr.
327 (P-415)[2050], 21. December 1985; & JP-
A-60 151 754**

(73) Patentinhaber: **Siemens Nixdorf Informationssysteme AG
Otto-Hahn-Ring 6
W-8000 München 83(DE)**

(72) Erfinder: **Kock, Ernst Josef, Dr.
Bahnsteg 1
W-8011 Kirchseeon(DE)**

(74) Vertreter: **Fuchs, Franz-Josef, Dr.-Ing. et al
Postfach 22 13 17
W-8000 München 22(DE)**

EP 0 271 773 B1

## Beschreibung

Die Erfindung betrifft ein Verfahren und eine Anordnung zum Erkennen und Melden von fehlerhaften, Datenmultiplexer steuernden Steuersignalen in integrierten Schaltungsbausteinen entsprechend dem Oberbegriff des Patentanspruches 1.

Aufgrund der allgemeinen Miniaturisierung der Schaltkreise in der Datenverarbeitungstechnik werden zunehmend auch Datenmultiplexer in integrierten Schaltungsbausteinen untergebracht. Die Datenmultiplexer verarbeiten dabei in der Regel paritätsbitgesicherte Daten, die dadurch überwacht werden, daß in einer nachgeschalteten, außerhalb des Schaltungsbausteines angeordneten Fehlererkennungs- und Fehlermeldeeinrichtung, die gegebenenfalls auch eine Fehlerbehandlung durchführt, eine Paritätsbitprüfung vorgenommen wird.

Sind die die Datenmultiplexer einstellenden Steuersignale fehlerhaft, dann werden falsche Daten durchgeschaltet. Diese lösen aber keine Fehlermeldung aus, da aufgrund des lediglich falsch ausgewählten Einganges im Normalfall zu den Daten passende Paritätsbits angegeben werden. Sollen daher Steuersignalfehler erkannt werden, sind im Schaltungsbaustein gesonderte Fehlererkennungseinrichtungen vorzusehen, die im Fehlerfall entsprechende Fehlersignale zur Meldung des Fehlers erzeugen. Hierbei ergeben sich aber meist Probleme hinsichtlich der Herausführung der zusätzlichen Fehlersignale aus dem Schaltungsbaustein, da hierfür zusätzliche Ausgangsklemmen benötigt werden. Freie Ausgangsklemmen stehen jedoch häufig nicht zur Verfügung. Es muß dann entweder auf die Überwachung der Steuersignale verzichtet werden, was die Ergebnissicherheit allgemein verschlechtert, oder der Aufbau des Schaltungsbausteines muß so abgeändert werden, daß zusätzliche Klemmen für Fehlersignale zur Verfügung stehen.

Es sind bereits ein Verfahren und eine Schaltungsanordnung zur kombinierten Daten- und Selektionsfehlererkennung bei einem Auswahlschalter (FR-A-2 169 934) unter Hinzufügung und ausgangsseitiger Überprüfung von sogenannten Paritätsbitstellen bekannt. Hierbei wird eingangsseitig aus dem, den eigentlichen Daten unmittelbar zugeordneten Paritätssignal unter Berücksichtigung mindestens eines weiteren, die zutreffende Selektion kennzeichnenden Ereignisses ein modifiziertes Paritätssignal gebildet, wobei das jeweilige Paritätssignal derjenigen Eingänge, die im betreffenden Augenblick nicht selektiert werden sollen, verfälscht wird. Nachteilig bei dieser Methode ist, daß eine Bearbeitung der Daten bzw. der zu den Daten gehörenden Paritätsbits jeweils aller Eingänge des Auswahlschalters erfolgt, so daß ein hoher Bauteile- und Steuerungsaufwand erforderlich ist.

Es ist auch ein Mehrkanal-Zeitmultiplex-System (US-A-3 873 776) bekannt, bei dem auf all denjenigen Kanälen Alarmsignale übertragen werden, auf denen im Augenblick keine Daten übertragen werden. Da auch bei dieser Methode der Selektionsfehlererkennung alle nicht an der Datenübertragung beteiligten Kanäle betroffen sind, Alarmsignale zu übertragen, ist auch hier der Bauteile- und der Steuerungsaufwand sehr groß.

Aus IBM Technical Disclosure Bulletin, Band 19, Nr. 8, Jan. 1977, Seiten 2935 - 2936 ist unter dem Titel: "Indicating control-circuit detected errors" ein IC-Baustein bekannt, der zur Selektionsfehlererkennung bei einem Auswahlschalter eine, die Steuersignale des Auswahlschalters eigens überwachende Fehlererkennungseinrichtung aufweist. Sind beispielsweise die Steuersignale des Auswahlschalters in der Weise fehlerhaft, daß mehrere Datenwege gleichzeitig durchgeschaltet werden, erzeugt die Fehlererkennungseinrichtung über einen im Auswahlschalter speziell vorgesehenen Weg am Auswahlschalterausgang einen Datenfehler. Durch den im Auswahlschalter speziell vorgesehenen Weg weist der Auswahlschalter aber einen erhöhten technologischen Aufwand auf.

Aufgabe der Erfindung ist es nun, ein Verfahren und eine Anordnung zum Erkennen und Melden der fehlerhaften Einstellung von in integrierten Schaltungsbausteinen untergebrachten Multiplexern der zuletzt genannten Art so zu verbessern, daß Ausgangsklemmen zum Herausführen gesonderter Fehlersignale und ein, einen erhöhten technologischen Aufwand aufweisender Auswahlschalter nicht benötigt werden.

Diese Aufgabe wird hinsichtlich des Verfahrens gemäß der Erfindung durch die im kennzeichnenden Teil des Patentanspruches 1 angegebenen Merkmale gelöst. Dabei wird ein Steuersignalfehler in einen Datenfehler umgewandelt, indem bei Vorliegen eines Einstellfehlers aufgrund des erzeugten Fehlersignales ein vorgegebener Eingang des Multiplexers ausgewählt wird, der mit fehlerhaft erkennbaren Daten belegt ist. Die Überwachung erfolgt indirekt durch die die jeweils durchgeschalteten Daten überwachenden Einrichtungen. Der Multiplexer ist auf seine Grundfunktion, nämlich die Auswahl von Eingängen, beschränkt und damit ohne erhöhten technologischen Aufwand betreibbar. Es werden trotzdem entsprechende Fehlersignale bereitgestellt.

Auf die Erzeugung derartiger Fehlersignale und deren Umwandlung in eine Kombination von Einstellsignalen, die als fehlerhaft erkennbare Daten auswählen und durchschalten, kann gemäß einer Weiterbildung der Erfindung verzichtet werden, wenn nur einige vorgegebene Kombinationen von Einstellsignalen zur Auswahl von Multiplexereingängen mit richtig abgesicherten Daten als zulässig verwendet werden, so daß nicht zulässige Kombinationen einen mit fehlerhaft erkennbaren Daten beschalteten Eingang auswählen.

Stehen mehrere freie Datenmultiplexereingänge zur Verfügung, die durch verschiedene Fehlerbedingungen ausgewählt werden, kann jeder für die Fehlererkennung verwendete Eingang mit gesonderten charakteristischen Daten beschaltet werden, so daß beim Vorliegen eines Steuersignalfehlers von der nachgeschalteten Fehlererkennungseinrichtung mit großer Sicherheit aus den durchgeschalteten Daten ermittelt werden kann, um welchen Steuersignalfehler es sich hierbei handelt.

Die Schaltungsanordnung zur Durchführung des Verfahrens gemäß der Erfindung ergibt sich aus Patentanspruch 5. Diese weist neben dem wenigstens einen Multiplexer, bei dem ein Eingang mit als fehlerbar erkennbaren Daten beschaltet ist, und den Einrichtungen zur Überwachung der Einstellsignale weitere Einrichtungen zur Erzeugung einer Ersatzsteuersignalkombination im Fehlerfall auf. Außerdem weist sie neben den Überwachungseinrichtungen zur Prüfung der an den Ausgangsklemmen des Schaltungsbausteines anliegenden Daten Einrichtungen zur Prüfung von als fehlerhaft erkannten Daten auf Vorliegen von durch Einstellfehler eines Multiplexers bedingten Daten auf.

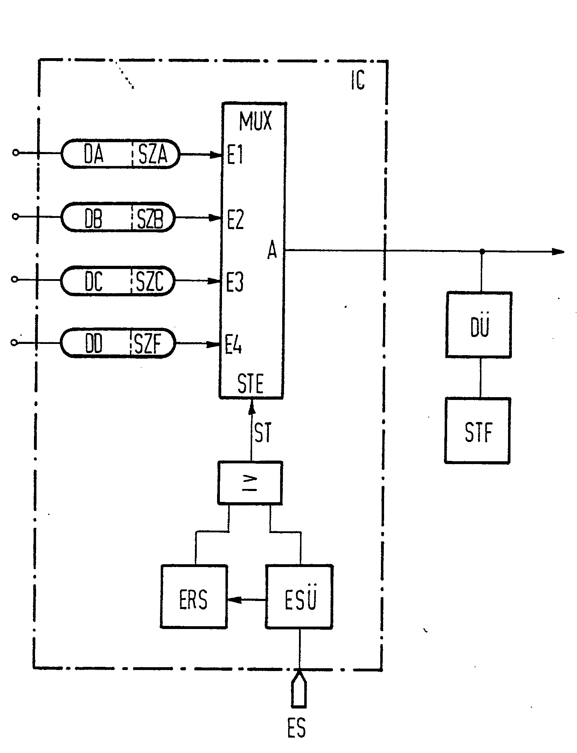

Weitere Einzelheiten der Erfindung werden anhand eines in der Zeichnung dargestellten Ausführungsbeispieles näher erläutert. Diese zeigt eine Prinzipdarstellung der Schaltungsanordnung gemäß der Erfindung.

Die dargestellte Schaltungsanordnung zeigt im Kernstück einen Multiplexer MUX mit vier Dateneingängen E1 bis E4 und einem Datenausgang A. An den Eingängen E1 bis E4 liegen die Daten DA bis DD an, die jeweils ein Sicherungszeichen SZA bis SZC beziehungsweise SZF mit sich führen. Bei diesen Sicherungszeichen kann es sich z.B. um Paritätsbits handeln. Den Dateneingängen E1 bis E3 können beliebige Daten DA bis DC zugeführt werden, während der Eingang E4 gemäß der Erfindung mit fest vorgegebenen Daten belegt ist, die als fehlerhaft erkennbar sind, z.B. durch falsch gewähltes Paritätsbit.

Der Multiplexer MUX wird über den Steuereingang STE mit den Steuersignalen ST eingestellt, die in der Regel den an den Anschlußklemmen ES des Schaltungsbausteines IC anliegenden Steuersignalen entsprechen und die an den Eingängen E1 bis E3 anliegenden Daten DA beziehungsweise DB beziehungsweise DC auswählen und zum Ausgang A des Multiplexers durchschalten. Im Fehlerfall wird dagegen der vierte Eingang E4 mit den Daten DD ausgewählt.

Die den Multiplexer MUX steuernden Steuersignale an den Anschlußklemmen ES werden dem Steuereingang STE des Multiplexers nicht direkt zugeführt, sondern in einer Überwachungseinrichtung ESÜ zunächst überprüft. Liegt kein Fehler vor, werden die Einstellsignale zum Steuereingang STE des Multiplexers weitergeleitet. Wird dagegen ein Fehler erkannt, wird durch die Überwachungseinrichtung ESÜ die Schalteinrichtung ERS wirksam geschaltet und eine Einstellsignalkombination erzeugt, die den vierten Dateneingang E4 des Multiplexers MUX auswählt. Die an diesem Eingang anliegenden Daten DD mit nicht dazu passendem Sicherungszeichen SZF werden zum Datenausgang A durchgeschaltet. Analoges gilt, wenn die Einstellsignale nicht von außen über die Anschlußklemmen ES zugeführt, sondern erst im Innern des Schaltungsbausteines IC gebildet werden.

Mit dem Datenausgang A des Multiplexers MUX ist eine Datenüberwachungseinrichtung DÜ gekoppelt, die die am Multiplexer bereitgestellten Daten anhand des mitgeführten Sicherungszeichens überprüft. Wird ein Fehler erkannt, kann mit zusätzlichen Einrichtungen STF geprüft werden, ob die vorliegenden Daten, den vorgegebenen Daten bei einem Einstellfehler des Multiplexers entsprechen und daher einen Einstellfehler anzeigen.

Stehen an einem Multiplexer mehrere freie Eingänge zur Verfügung und können bei der Überwachung der Einstellsignale unterschiedliche Arten von Fehlern, z.B. Paritätsfehler oder nicht zugelassene Kombinationen, festgestellt werden, so können die freien Dateneingänge am Multiplexer entsprechend den unterscheidbaren Fehlerarten mit unterschiedlichen Daten belegt werden, die eine Identifizierung der jeweiligen Fehlerart durch die Überwachungseinrichtung STF ermöglichen.

Analoges gilt für mehrere in Reihe geschaltete Multiplexer innerhalb des Schaltungsbausteines IC, wenn den einzelnen Multiplexern unterschiedliche Daten zur Fehlererkennung zugeordnet werden, anhand derer wenigstens ein fehlerhaft eingestellter Multiplexer identifizierbar ist.

Bei einer vereinfachten Ausführungsform der Erfindung kann sogar auf eine Fehlerüberwachung der Steuersignale für die Einstellung des Multiplexers verzichtet werden. Voraussetzung dafür aber ist, daß die Einstellsignalkombinationen so unterteilt werden, daß bei Vorliegen einer unzulässigen Kombination unmittelbar auf einen freien Eingang, der mit als fehlerhaft erkennbaren Daten belegt ist, umgesteuert wird. Beim in der Zeichnung dargestellten Ausführungsbeispiel wäre dies möglich, wenn zwei Dateneingänge, z.B. E3 und E4, für Überwachungszwecke verfügbar sind und die unzulässigen Signalkombinationen "10" und "11" zwangsläufig einen dieser Eingänge durchschalten.

**Patentansprüche**

1.　Verfahren zum Erkennen und Melden der fehlerhaften Einstellung von in integrierten Schaltungsbausteinen untergebrachten Multiplexern, die abhängig von zugeführten Einstellsignalen aus den vorhandenen Eingängen für mehrere durch mitgeführte Sicherungszeichen (z.B. Paritätsbit) gesicherte Daten jeweils einen auswählen und zum Ausgang durchschalten, wobei die jeweils zum Ausgang des Multiplexers durchgeschalteten und an Ausgangsklemmen des Schaltungsbausteins zur Verfügung stehenden Daten anhand des mitgeführten Sicherungszeichens überprüft werden, während die Einstellsignale gesondert auf mögliche Fehler innerhalb des Schaltungsbausteines überwacht werden, **dadurch gekennzeichnet,** daß wenigstens ein Eingang (z.B. E4) des Multiplexers (MUX) fest mit einem gesonderten, als fehlerhaft erkennbaren Datum (z.B. DD.SZF) angesteuert wird und daß bei Feststellung eines Fehlers bei den Einstellsignalen (ES) die Einstellsignale (ES) derart abgeändert dem Multiplexer (MUX) zugeführt werden daß einer der mit als fehlerhaft erkennbaren Daten belegten Eingänge ausgewählt und durchgeschaltet wird.

2. Verfahren nach Anspruch 1, **dadurch gekennzeichnet,** daß bei mehreren frei verfügbaren Eingängen des Multiplexers wenigstens einige dieser Eingänge mit gesonderten, als fehlerhaft erkennbaren Daten belegt werden und daß diese Daten unterschiedlichen Einstellfehlern zugeordnet werden.

3. Verfahren nach Anspruch 1 oder 2, für mehrere innerhalb eines integrierten Schaltungsbausteines in Reihe wirksamen Multiplexern, **dadurch gekennzeichnet,** daß für jeden Multiplexer (MUX) gesonderte als fehlerhaft erkennbare Daten verwendet werden, so daß wenigstens ein fehlerhaft eingestellter Multiplexer (MUX) als solcher identifizierbar ist.

4. Verfahren nach einem der Ansprüche 1 bis 3, **dadurch gekennzeichnet,** daß die erlaubten Kombinationen für die Einstellsignale derart gewählt werden, daß ein Fehler bei den Einstellsignalen automatisch zu einer unerlaubten Kombination der Einstellsignale führt und als Folge davon unmittelbar einer der mit als fehlerhaft erkennbaren Daten belegten Eingänge ausgewählt und durchgeschaltet wird.

5. Anordnung zum Erkennen und Melden der fehlerhaften Einstellung von in integrierten Schaltungsbausteinen untergebrachten Multiplexern, bestehend aus einer Datenüberwachungseinrichtung zur Überwachung der von dem Multiplexer durchgeschalteten, mit einem Sicherungszeichen gesicherten Daten und einer innerhalb des integrierten Schaltungsbausteins angeordneten Steuersignalüberwachungseinrichtung zur Überwachung der den Multiplexer einstellenden Steuersignalen, **dadurch gekennzeichnet,** daß wenigstens ein Eingang (z.B. E4) des Multiplexers (MUX) fest mit einem gesonderten, als fehlerhaft erkennbaren Datum (z.B. DD.SZF) belegt ist und daß eine mit der Steuersignalüberwachungseinrichtung (ESÜ) verbundene Schalteinrichtung (ERS) vorgesehen ist, die ausgangsseitig über ein entsprechendes Schaltglied auf den Steuereingang (STE) des Multiplexers (MUX) derartig geschaltet ist, daß bei Vorliegen eines Steuersignalfehlers eine von der Schalteinrichtung (ERS) erzeugte Ersatzkombination von Einstellsignalen zur Auswahl eines mit einem gesonderten, als fehlerhaft erkennbaren Datum belegten Einganges (z.B. E4) am Multiplexer (MUX) anliegt.

6. Anordnung nach Anspruch 5, **dadurch gekennzeichnet,** daß bei Belegung mehrerer Eingänge des Multiplexers (MUX) mit gesonderten, als fehlerhaft erkennbaren Daten entsprechend den feststellbaren verschiedenen Arten von möglichen Einstellfehlern, die Schalteinrichtung (ERS) entsprechend viele Ersatzkombinationen von Einstellsignalen erzeugt.

7. Anordnung nach Anspruch 5 oder 6, **gekennzeichnet durch** mit der Datenüberwachungseinrichtung (DÜ) zur Prüfung der an den Ausgangsklemmen des Schaltungsbausteines (IC) bereitgestellten Daten gekoppelte gesonderte Einrichtung (STF) zur gesonderten Prüfung von als fehlerhaft erkannten Daten auf das Vorliegen von durch Einstellfehler eines Multiplexers (MUX) bedingten Daten.

## Claims

1. Method for detecting and signalling the faulty setting of multiplexers accommodated in integrated circuits, which multiplexers select in each case one item of data from the available inputs for a plurality of items of data protected by accompanying check symbols (eg. parity bit), depending on the setting signals supplied, and pass the said item of data through to the output, the items of data which in each case are passed through to the output of the multiplexer and are made available at the output terminals of the circuit being checked by means of the accompanying check symbol, while the setting signals are monitored separately for possible faults inside the circuit, characterised in that at least one input (eg. E4) of the multiplexer (MUX) is fixedly driven by a separate item of data (eg. DD.SZF) which can be identified as being faulty, and in that, on confirmation of a fault in the setting signals (ES), the setting signals (ES) are supplied in a modified form to the multiplexer (MUX) such that one of the inputs which is carrying items of data (e.g. DD.SZF) which can be identified as being faulty is selected and passed through.

2. Method according to Claim 1, characterised in that in the case of a plurality of freely available inputs of the multiplexer, at least some of these inputs carry separate items of data which can be identified as being faulty, and in that these items of data are allocated to different setting faults.

3. Method according to Claim 1 or 2, for a plurality of multiplexers effective in series inside an integrated circuit, characterised in that separate items of data which can be identified as being faulty are used for each multiplexer (MUX), so that at least one multiplexer (MUX) having a faulty setting can be identified as such.

4. Method according to one of Claims 1 to 3, characterised in that the permitted combinations for the setting signals are selected such that a fault in the setting signals automatically leads to an impermissible combination of the setting signals and, as a consequence thereof, one of the inputs carrying items of data which can be identified as being faulty is immediately selected and passed through.

5. Arrangement for detecting and signalling the faulty setting of multiplexers accommodated in integrated circuits, consisting of a data monitoring device for monitoring the items of data which are passed through by the multiplexer and are protected with a check symbol, and a control signal monitoring device, arranged inside the integrated circuit, for monitoring the control signals which set the multiplexer, characterised in that at least one input (eg. E4) of the multiplexer (MUX) fixedly carries a separate item of data (eg. DD.SZF) which can be identified as being faulty, and in that a switching device (ERS), connected to the control signal monitoring device (ESÜ), is provided, the output side of which is connected via a corresponding switching element to the control input (STE) of the multiplexer (MUX) such that, in the presence of a control signal fault, a substitute combination of setting signals, produced by the switching device (ERS), is applied to the multiplexer (MUX) for selection of an input (eg. E4) carrying a separate item of data which can be identified as being faulty.

6. Arrangement according to Claim 5, characterised in that when a plurality of inputs of the multiplexer (MUX) are carrying separate items of data which can be identified as being faulty, the switching device (ERS) produces a corresponding multiplicity of substitute combinations of setting signals, corresponding to the confirmable different types of possible setting faults.

7. Arrangement according to Claim 5 or 6, characterised by a separate device (STF), coupled to the data monitoring device (DÜ) for testing the items of data presented at the output terminals of the circuit (IC), for separate testing of items of data which are identified as being faulty for the presence of items of data which are dependent on a setting fault of a multiplexer (MUX).

**Revendications**

1. Procédé pour identifier et pour signaler le réglage défectueux de multiplexeurs logés dans des modules de circuits intégrés qui, en fonction des signaux de réglage appliqués, sélectionnent, parmi les entrées qui existent pour plusieurs données qui sont protégées par des signes de sauvegarde convoyés en même temps (par exemple des bits de parité), l'une d'entre elles et en établir la connexion avec la sortie, les données qui ont été transmises à la sortie du multiplexeur, et qui sont disponibles aux bornes de sortie du module de circuit, étant contrôlées à l'aide des signaux de sauvegarde convoyés en même temps, alors que les signaux de réglage sont contrôlés séparément et à l'intérieur des modules de circuit, pour ce qui concerne la présence éventuelle de défauts, caractérisé par le fait qu'au moins une entrée (par exemple E4) du multiplexeur (MUX) est attaquée de façon fixe avec des données (par exemple DD. SZF)) reconnaissables comme étant défectueuses ou erronées, et que lors de la constatation d'un défaut ou d'une erreur dans les signaux de réglage (ES), ces derniers sont appliqués au multiplexeur (MUX) avec une modification telle que l'une des entrées (par exemple DD. SZF) occupée par des données reconnaissables comme étant erronée, est sélectionnée et est interconnectée.

2. Procédé selon la revendication 1, caractérisé par le fait que dans le cas de plusieurs entrées du multiplexeur, qui sont librement disponibles, au moins quelques unes de ces entrées sont occupées par des données distinctes, susceptible d'être reconnues comme étant erronées ou défectueuses, et qu'à ces données sont associées des erreurs de réglage différentes.

3. Procédé selon la revendication 1 ou 2, pour plusieurs multiplexeurs opérant en série à l'intérieur d'un module de circuit intégré, caractérisé par le fait que pour chaque multiplexeur (MUX) on utilise des données distinctes, susceptibles d'être reconnues comme étant erronées, en sorte qu'au moins un multiplexeur (MUX) qui a été réglé ou ajusté de façon erroné, soit susceptible d'être identifié comme tel.

4. Procédé selon l'une des revendications 1 à 3, caractérisé par le fait que les combinaisons autorisées pour les signaux de réglage sont choisis de telle façon qu'un défaut ou une erreur des signaux de réglage a automatiquement comme conséquence une combinaison non autorisée des signaux de réglage, avec pour conséquence que l'une des entrées qui est occupée par des données qui sont susceptibles d'être reconnues comme défectueuses, est sélectionnée et est interconnectée.

5. Dispositif pour identifier et pour signaler le réglage défectueux ou erroné de multiplexeurs logés dans un module de circuit intégré, constitué par un dispositif de contrôle des données en vue de contrôler les données interconnectées par le multiplexeur et assurées à l'aide d'un signal de sauvegarde, et par un dispositif de contrôle des signaux de commande, qui est disposé à l'intérieur du module de circuit intégré, en vue de contrôler les signaux de commande qui ajustent le multiplexeur, caractérisé par le fait qu'au moins une entrée (par exemple E4) du multiplexeur (MUX) est occupé, de façon fixe, par une donnée distincte (par exemple DD. SZF), susceptible d'être reconnue comme erronée, et qu'un dispositif de commutation (ERS), relié au dispositif de contrôle des signaux de commande (ESÜ), est prévu, lequel est connecté, côté sortie, et par l'intermédiaire d'un élément de commutation correspondant, sur l'entrée de commande (STE) du multiplexeur (MUX) de telle façon qu'en présence d'un défaut du signal de commande, une combinaison de remplacement, produite par le dispositif de commutation (ERS), de signaux de réglage, est appliquée au multiplexeur (MUX), pour la sélection d'une entrée (par exemple E4) occupée par une donnée distincte, qui est susceptible d'être identifiée comme étant erronée.

6. Dispositif selon la revendication 5, caractérisé par le fait que dans le cas de l'occupation de plusieurs entrées du multiplexeur (MUX) avec des données distinctes, reconnaissables comme étant erronées, et en fonction des différents genres de défaut de réglage possibles et qui sont susceptibles d'être déterminés, le dispositif de commutation (ERS) produit un nombre correspondant de combinaisons de remplacement de signaux de réglage.

7. Dispositif selon la revendication 5 ou 6, caractérisé par le couplage, avec le dispositif de surveillance des données (DÜ), et pour le contrôle des données qui sont préparées au niveau des bornes de sortie du module du circuit (IC), d'un dispositif distinct (STF) pour le contrôle distinct de données, reconnues comme étant erronées, pour ce qui concerne la présence de données résultant d'une erreur de réglage d'un multiplexeur (MUX).